(19) Europäisches Patentamt
European Patent Office
Office européen des brevets

(11) **EP 4 197 777 B1**

(12) **EUROPÄISCHE PATENTSCHRIFT**

(45) Veröffentlichungstag und Bekanntmachung des Hinweises auf die Patenterteilung:
**17.06.2026  Patentblatt 2026/25**

(21) Anmeldenummer: **22212110.5**

(22) Anmeldetag: **08.12.2022**

(51) Internationale Patentklassifikation (IPC):
*G10K 11/162* (2006.01)    *B60R 13/08* (2006.01)
*B32B 3/28* (2006.01)    *B32B 5/02* (2006.01)
*B32B 5/26* (2006.01)

(52) Gemeinsame Patentklassifikation (CPC):
*G10K 11/162; B32B 3/28; B32B 5/022;*
*B32B 5/266; B60R 13/08;* B32B 2250/20;
B32B 2262/0284; B32B 2262/144; B32B 2307/102;
B32B 2307/7376

(54) **AKUSTISCH WIRKSAMES UND DIMENSIONSSTABILES FORMTEIL**

ACOUSTICALLY EFFECTIVE AND DIMENSIONALLY STABLE SHAPED PART

PIÈCE FAÇONNÉE À EFFET ACOUSTIQUE ET DIMENSIONNELLEMENT STABLE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **17.12.2021  DE 102021133730**

(43) Veröffentlichungstag der Anmeldung:
**21.06.2023  Patentblatt 2023/25**

(73) Patentinhaber: **Sandler AG**
**95126 Schwarzenbach/Saale (DE)**

(72) Erfinder:
• **Der Erfinder hat auf sein Recht verzichtet, als solcher bekannt gemacht zu werden.**

(74) Vertreter: **Grünecker Patent- und Rechtsanwälte PartG mbB**
**Leopoldstraße 4**
**80802 München (DE)**

(56) Entgegenhaltungen:
**EP-B1- 2 425 965        AU-C1- 2010 233 029**
**US-A1- 2016 222 561**

## Beschreibung

Die Schalldämpfung zur Komfortsteigerung bei automobilen Anwendungen hat in der Vergangenheit eine Reihe von Lösungsansätzen hervorgebracht.

Die Schalldämpfung in einer porösen Struktur ist dabei von der akustischen Impedanz bzw. dem spezifischen Strömungswiderstand abhängig. Durch die akustische Impedanz wird der Widerstand beschrieben, welcher der Schallausbreitung in der porösen Struktur entgegengesetzt wird. Er lässt sich als Quotient von Schalldruck und Schallfluss berechnen. Die akustische Impedanz einer porösen Struktur lässt sich auch durch den spezifischen Strömungswiderstand beschreiben.

Dieser ist abhängig von der inneren Oberfläche der Struktur und der Größe und Anzahl der Poren.

Eine hohe innere Oberfläche begünstigt die Reibungsverluste (Dissipation) der durchströmenden Schallwelle. Ein hoher Strömungswiderstand ist für eine gute Schallabsorptionsfähigkeit der porösen Struktur wichtig.

Ist allerdings der spezifische Strömungswiderstand zu hoch und die Struktur zu dicht, kann die Schallwelle nicht in die Struktur eindringen und es kommt zu Effekten der Reflektion und die Schallabsorption wird deutlich reduziert.

Ist der Strömungswiderstand hingegen zu gering, sind die viskosen Reibungsverluste und damit die dissipative Umwandlung der mechanischen Energie in Wärmeenergie zu gering. Auch hier sind geringe Dämpfungseffekte und damit geringe Schallabsorptionen zu erwarten.

Der spezifische Strömungswiderstand muss in einem optimalen Bereich liegen.

Hier werden in der Literatur verschiedene Erfahrungswerte genannt. Der spezifische Strömungswiderstand sollte in einem Bereich zwischen 1.000 - 3.000 Pa s/m liegen.

Speziell bei der Schalldämpfung durch textile Flächengebilde wurde mit verschiedenen Lösungswegen versucht, die innere Oberfläche der porösen Struktur zu erhöhen, um so eine Dämpfung der Schallwellen über das gesamte kritische Frequenzspektrum von 500Hz bis 6300Hz zu erreichen.

Neben der Schallabsorption sind weitere, physikalische Faktoren für die Eignung eines Formteiles anzuwenden. Neben der Formstabilität sind bei exterieur Anwendungen wie Radhausschalen oder Unterbodenmatten auch Beständigkeit gegenüber Steinschlag oder Dichtigkeit gegenüber Wasserbeaufschlagung gefordert.

Der Stand der Technik bietet dafür verschiedene Lösungsansätze.

Die EP484778 beschreibt den Einsatz von Faser-basierenden Matten aus Vliesstoffen, die als Grundmaterial zur Herstellung von Formteilen benutzt werden können. Neben der Beschreibung eines möglichen Herstellverfahren hat die EP484778 den Ansatz polymereinheitlich zu arbeiten, sodass das Recycling vereinfacht wird. Zur Verbesserung der Formstabilität und auch flüssigkeitsabweisender Eigenschaften können weitere Lagen aufkaschiert werden oder auch durch Auslegung Verformungswerkzeug wie bspw Sicken oder Distanzstücken gesteuert werden.

Die EP476538 beleuchtet die Zusammensetzung einer Faser-basierenden Matte zur Herstellung von formstabilen Formteilen tiefer. Dieses Patent beschreibt Verwendung von Fasern mit erhöhten amorphen Anteilen als Versteifungs- und Klebekomponente. Durch thermische Behandlung werden amorphe Bereiche von Fasern in kristalline Bereiche umgewandelt. Nach thermischer Behandlung und Erkalten bildet die Fasermatte ein stabiles Formteil. Gemäß der Beschreibung ist es Ziel, ein polymereinheitliches Formteil herzustellen, was durch Verwendung von Faser mit amorphen Anteilen eine Versteifung bringt, diese aber auch als Kleber für Oberflächenkaschierung dienen.

Sowohl die EP484778, aber auch die EP476538 geben keine Hinweise, wie eine zielgerichtete akustische Wirkung erzielt werden kann.

Die DE102005035014 zeigt, wie die akustische Wirkung von Vliesstoffen verbessert werden können. Durch das Einbringen vieler Reflektionsstellen mittels flächiger, ein- oder beidseitiger Glättung wird die akustische Dämpfwirkung verbessert. Nachteilig an Materialien gemäß der DE102005035014 ist, dass das Material über die gesamte Oberfläche bearbeitet ist und dass das Vlies beim alleinigen Verwenden als Basismaterial für ein Formteil aufgrund der feinen Fasermischung mit einem mittleren Titer von kleiner 2dtex eine geringe Verformbarkeit und resultierende mangelnde Steifigkeit aufweist.

Aus dem Stand der Technik ist weiter das Dokument US 2016/222561 A1 bekannt. Es zeigt die Anwendung von thermoplastischen Fasern zur Bildung eines Formteils. AU 2010 233 029 C1 zeigt eine thermoformbare akustische Platte, hergestellt aus einem komprimierten Faserflies.

Der Erfindung lag daher die Aufgabe zugrunde, ein akustisch wirksames Formteil bereitzustellen, das die vorgenannten Nachteile des Standes der Technik vermeidet und einen Aufbau für ein Schalldämpfungsmaterial anzugeben, welches neben Formstabilität je nach Anforderung zonal unterschiedliche Schalldämpfung und / oder Biegesteifigkeit gewährleistet.

Die Aufgabe wurde gemäß den Merkmalen des Anspruches 1 gelöst, vorteilhafte Ausgestaltungen sind in den Unteransprüchen 2 bis 4 genannt.

Die in der Beschreibung genannten Parameter werden dabei gemäß den nachstehenden Methoden ermittelt:

Mittlere Faserfeinheit: wird gemäß der nachstehenden Methode anhand der nominellen Faserfeinheit der in der Fasermischung zum Einsatz kommenden Fasern errechnet und in "g/10000m" (entspricht auch der Einheit "dtex") angegeben.

$$\text{Mittlere Faserfeinheit (g/10000m)} = \left( \cfrac{100}{\left( \cfrac{A}{T1} + \cfrac{B}{T2} + \cfrac{C}{T3} \right)} \right)$$

wobei folgendes gilt:

A, B,C = der Prozentanteil einer Faserkomponente in der Mischung. Die Summe aus A, B und C ist 100.
T1, T2, T3 = nomineller Faserfeinheit der jeweiligen Faserkomponente in "g/10000m"

<u>Mittlere Faserfaserdurchmesser</u>: wird gemäß der nachstehenden Formel anhand der mittleren Faserfeinheit und der mittleren Dichte des Polymers der in der Fasermischung zum Einsatz kommenden Fasern errechnet:

$$\text{Mittlerer Faserdurchmesser (m)} = \sqrt{\cfrac{4*\,MF}{3{,}1419*\,D*10^7}}$$

wobei folgendes gilt:

MF= mittlere Faserfeinheit angegeben in "g/10000m"
D= Dichte des Basispolymer der Faser, angegeben in "kg/m$^3$"

<u>Massenbezogene spezifische Faseroberfläche</u>: wird nachstehender Formel auf Basis der im Basismaterial vorliegenden Fasermischung errechnet und in "m$^2$/g" angegeben.

$$\text{Spez Faseroberfläche (m²/g)} = \cfrac{MFD * 10000 * 3{,}1419}{MF}$$

wobei folgendes gilt:

MFD= mittlerer Faserdurchmesser
MF= mittlere Faserfeinheit

<u>Flächengewicht</u>: gemäß DIN EN 29073-1, angegeben in "g/m$^2$"
<u>Dicke</u>: gemäß DIN EN ISO 9073-2 bei einer Vorlast von 0,5 kPa, angegeben in "mm"
<u>Raumgewicht</u>: wird gemäß der nachstehenden Formel anhand der Dicke des Prüflings und des am Prüfling gemessenen Flächengewichts ermittelt, Angabe in "kg/m$^3$"

$$\text{Raumgewicht (kg/m}^3\text{)} = \frac{\text{Flächengewicht (kg/m}^2\text{) *1000}}{\text{Dicke (mm)}}$$

Porosität: wird gemäß nachstehender Formel errechnet und in "%" angegeben.

$$\text{Porosität (\%)} = \left[ 1 - \left[ \frac{\text{Raumgewicht des Prüflings (kg/m}^3\text{)}}{\text{Dichte des verwendeten Fasermaterials (kg/m}^3\text{)}} \right] \right] *100$$

Spezifischer Strömungswiderstand: gemäß DIN EN 29053 Verfahren A. Bestimmung des Strömungswiderstandes nach dem Luftgleichstrom - Verfahren.

Bestimmung der Schallabsorption: gemäß DIN EN ISO 10534 - 2. Bestimmung des Schallabsorptionskoeffizienten und der Impedanz in Impedanz - Rohren.

Teil 2: Übertragungsfunktionsmethode

Als Impedanzrohr kommt ein rundes Rohr, Hersteller Brüel&Kjaer, mit einem Durchmesser von 29mm zum Einsatz. Das Prüfmuster wird schallhart direkt auf die Rohröffnung gelegt, dies bedeutet einen Luftspalt von 0mm.
Gemessen wird die Absorption im Frequenzbereich von 500Hz - 6.300 Hz

Biegesteifigkeit (3-Punkt Biegeversuch): wird in Anlehnung an die ISO 178 mittels UPM der Firma Zwick, Deutschland ermittelt. Dabei folgende Einstellung notwendig sind:

Verformungsgeschwindigkeit (mm/min): 10
Abstand der Auflager (mm): 64
Breite der Prüffinne (mm): 50
Dicke der Prüffinne (mm): 10
Radius der Prüffinne (mm): 5
Breites des Prüflings (mm): 30
Länge des Prüflings (mm): 120
Position der Prüffinne: mittig zwischen Auflagern

Die Prüfung erfolgt an Mustern, deren Faserausrichtung des Basismaterials in Produktionsrichtung "MD" oder quer zur Produktionsrichtung "CD" ausgerichtet ist. Üblicherweise werden derartig Muster gestanzt.
Die Prüffinne quer zur Prüflingslänge mittig aufgesetzt zwischen den Auflagern angeordnet. Nach Prüfungsbeginn bewegt sich die Prüffinne mit der Verformungsgeschwindigkeit in Richtung des Prüflings. Bei erstem Kontakt der Prüffinne mit dem Prüfling (Kraft / Vorlast = 0,1N) wird der Messweg genullt und erneut gezählt. Bei Erreichen des Messwegs von 1mm, 2mm, 3mm, 4mm und 5mm wird die an der Finne anliegende Kraft ermittelt und in "N" angegeben.
Im Sinne der vorliegenden Erfindung wird als Biegesteifigkeit diejenige Kraft angegeben, die bei 5mm Verformungsweg an der Druckfinne anliegt.
Abplattung: der Begriff definiert sich als Verformung einer Faseroberfläche, wobei

• ein Teil der Faseroberfläche plan gepresst ist und
• die Breite und Länge der planen Oberfläche mindestens 1,3fach größer als der ursprüngliche Faserdurchmesser ist.
• Die Breite wird ermittelt in einer Richtung in der Ebene einer Abplattung

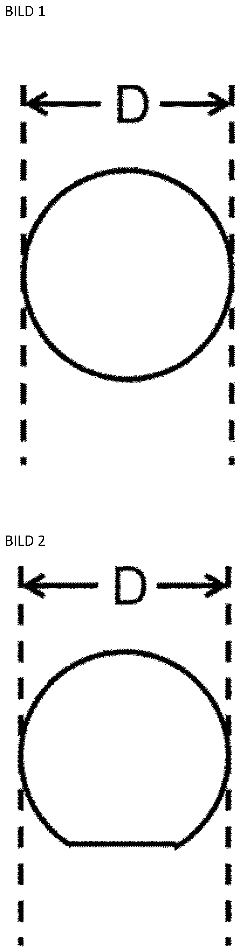

Eine Abplattung (1) ist eine plane Fläche, die auf der Außenseite eines erfinderischen Formteils liegt. Eine erfindungsgemäße ausgebildete Abplattung (1) muss eine plane Fläche aufweisen, deren in Breite und Länge mindestens 1,3fach größer als der Durchmesser D der zum Einsatz kommenden Klebefaser ist. Die Bilder 1 bis 4 verdeutlichen dies:
Auf Bild 1 erkennt man eine unbehandelte Klebefaser, diese hat einen runden Querschnitt mit dem Faserdurchmesser D.

Bild 2 zeigt den Querschnitt einer Hitze- und Druck-behandelten Klebefaser, wobei nur eine leichte Glättung erkennbar ist. Die Breite der Glättung liegt unterhalb des Faserdurchmessers D.

Bild 3 zeigt den Querschnitt einer Hitze- und Druck-behandelten Klebefaser, wobei nur eine stärkere Glättung erkennbar ist. Die Breite der Glättung liegt im Bereich des Faserdurchmessers D.

Bild 4 zeigt den Querschnitt einer erfindungsgemäß Hitze- und Druck-behandelten Klebefaser, wobei diese so gepresst wurde, dass die abgeplattete Oberfläche die erfindungsgemäßen Abplattungen (1) beschreibt. Die Breite einer erfindungsgemäß beanspruchten Abplattung (1) beträgt mindestens das 1,3-fache des Faserdurchmessers D.

Abplattungsgrad: wird gemäß der nachstehenden Methode ermittelt und in "%" angegeben. Dabei wird anhand einer Rasterelektronen-Mikroskop Aufnahme bestimmt, wie viele abgeplattete Fasern in der Außenschicht eines Formteils liegen. Die dabei erkennbaren Abplattungen werden flächenmäßig ins Verhältnis zur Fläche der Oberfläche gesetzt.

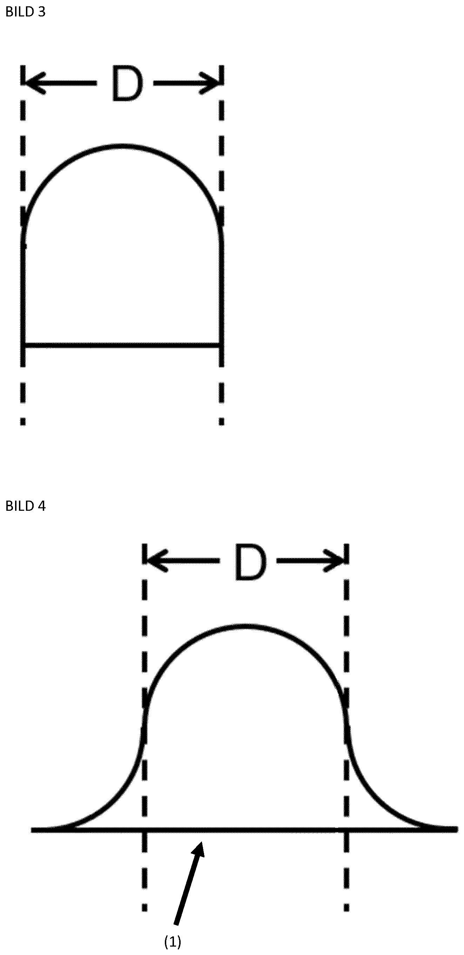

Eine REM-Aufnahme der Oberfläche eines Formteils, auf dem die oberflächlich liegenden Abplattungen erkennbar sind, bspw Bild 4 mit vielen Abplattungen, wird auf Standard-Kopier-Papier, ($80g/m^2$) randlos gedruckt. Die gesamte Bildfläche wird gewogen, und als "Gewicht 1" in "g" angegeben. Die Abplattungen werden mittels eines Skalpells, Typ Wedo 78621 ausgeschnitten, gewogen und als "Gewicht 2" in "g" angegeben. Der Abplattungsgrad wird dann wie folgt errechnet:

$$\text{Abplattungsgrad (\%)} = \left[ 1 - \left[ \frac{\text{Gewicht 1} - \text{Gewicht 2}}{\text{Gewicht 1}} \right] \right] *100$$

Pressgrad: Verhältnis der Dicke des Formlings vor Verformung und des Formteils nach erfolgter Verpressung.

Pressgrad in % wird wie folgt ermittelt:

$$\text{Pressgrad} = \left[ \frac{\text{Dicke Formling} - \text{Dicke Formteil}}{\text{Dicke Formling}} \right] *100$$

Die beschriebenen Fasertypen definieren sich wie folgt:

Unter dem Begriff Matrixfasern sind normale Stapelfasern aus synthetischen, thermoplastischen Polymeren, deren Filamente verstreckt wurden und einen hohen Anteil kristalliner Bereiche aufweisen. Diese Fasern haben eine Faserfeinheit zwischen 0,9 bis 4,4dtex, wobei zur Gewährleistung der akustischen Wirkung ein Fasertiter-Bereich von 1,3-3,3dtex bevorzugt und ganz bevorzugt ein Bereich von 1,7-2,2dtex eingesetzt wird. Beim Erhitzen während der Herstellung eines Formteiles behalten diese Fasern die Form und weisen keine klebende Eigenschaften auf. Sie schmelzen erst bei Erreichen des Schmelzpunktes des Basispolymers, bspw bei Polyethylenterephthalat 256°C. Die Kristallinität wird bei der Faserherstellung mittels Verstrecken der Filamente während des Spinnprozesses erzielt.

Unter dem Begriff Schmelzklebefasern sind synthetische Fasern zu verstehen, deren Polymere, insbesondere die schmelzbaren Anteile im Temperaturbereich beginnend mit Erreichen das Glasumwandlungspunkts (Tg) bis zum Schmelzpunkt weich, aber nicht klebrig werden. Die schmelzbaren Anteile werden erst bei Überschreiten der Schmelztemperatur vollständig flüssig (viskos). Die flüssigen (viskosen) Anteile lagern sich bevorzugt an Faserkreuzungspunkten an und verkleben nach Erkalten diese. Es bilden sich sogenannte Bindepunkte. Schmelzklebefasern können als homokomponente aber auch als bikomponente Fasern eingesetzt werden. Diese Fasern haben eine Faserfeinheit zwischen 4,4 bis 7,7 dtex, wobei zur Gewährleistung der Bindewirkung ein Fasertiter-Bereich von 4,4-5,4dtex bevorzugt wird. Bis zum Erreichen des Schmelzpunktes der jeweilig eingesetzten Polymere haben derartige Fasern keine Klebe-Eigenschaften. Beispielsweise kann dabei eine bikomponente Kern-/Mantel-Schmelzklebefaser verwendet werden. Der Faserkern kann beispielsweise aus einem Polyethylenterephthalat mit einem Schmelzpunkt von 256°C gebildet werden, der Fasermantel aus einem Co-Polyethylenterephthalat mit einem Schmelzpunkt von 110°C.

Der Begriff Klebefasern beschreibt synthetische homopolymere Stapelfasern, die überwiegende amorphe, noch nicht kristallisierte Anteile aufweisen. Im Unterschied zu den vorerwähnten Schmelzklebefasern sind Klebefasern im Temperaturbereich von Glaspunkt bis zum Schmelzen des Polymers klebrig und verformbar.

In einer bevorzugten Ausführung werden Klebefasern mit einer Faserfeinheit zwischen 4,4 bis 17,0dtex, wobei zur Gewährleistung der akustischen Wirkung und zur Gewährleistung der Bauteilsteifigkeit ein Fasertiter-Bereich von 4,4 - 11,0dtex bevorzugt und ganz bevorzugt ein Bereich von 5,4 - 9,0dtex eingesetzt. Bei Druckbelastung oberhalb der Glastemperatur können Klebefasern plastisch verformt werden. Des Weiteren können sich Klebefasern durch Anwendung von Druck / Kalandrierung oberhalb der des Tg mit sich selbst oder mit anderen Fasern verkleben.

Mit der ersten Hitzebehandlung wird ein irreversibler, langsam fortschreitender Kristallisationsprozess angestoßen. Nach Abschluss des Kristallisationsprozesses sind die erzeugten Bindungen oder Verformung auch oberhalb der Glastemperatur beständig.

Wie bereits eingangs erwähnt, muss ein Formteil formstabil, biegesteif und schallabsorbierend sein.

Der Stand der Technik geht dabei von der Verwendung von Fasermischungen aus, die einen geringen mittlerer Fasertiter im Bereich von kleiner 3,0dtex aufweisen. Die üblicherweise zur Verwendung kommenden Matrixfasern haben einen Titer von 2,2dtex oder geringer. Dies gewährleistet zwar Schalldämpfung, bringt aber keine Steifigkeit in einem Formteil. Siehe dazu auch die Tabelle 1.

Die vorliegende Erfindung unterscheidet sich hier vom Stand der Technik.

Die vorliegende Erfindung wird definiert durch die Merkmale des unabhängigen Anspruchs 1.

Diese Vorteile eines erfindungsgemäß ausgeführten Formteils gegenüber dem Stand der Technik sind begründet durch die Verwendung von Klebefasern und deren höheren Faserdurchmesser. Dadurch sind in der Mischung zwar weniger Fasern vorhanden, durch den höheren Faserdurchmesser der Klebefasern wird aber mehr Klebemasse zur Verfügung gestellt. Diese Klebemasse wird dann bei Druck- und Hitzebehandlung dem Formteil als Versteifungsmasse angeboten, sodass die Biegesteifigkeit eines erfindungsgemäß ausgeführten Formteils deutlich über dem Stand der Technik liegt.

Bevorzugt ist die Verwendung von Klebefaser mit einem Fasertiter größer 4,4 dtex. Um die Kombination von Schalldämpfung und Bauteil-Steifigkeit zu gewährleisten wird bevorzugt als Basismaterial ein Vliesstoff hergestellt, der einen Anteil von 40-80Gew% Klebefaser in einem Titerbereich von 4,4 bis 17,0dtex, 60-0Gew% Schmelzklebefasern in einem Titerbereich von 4,4 bis 7,0dtex und 60-10Gew% Matrixfasern im Titerbereich von 1,7 bis 3,3 dtex aufweist.

Die mittlere Faserfeinheit einer besonders bevorzugten Fasermischung muss größer 4,4dtex liegen. Dies um die Bauteil-Steifigkeit zu gewährleisten.

Erfindungsgemäße ausgeführte Formteile können beispielsweise wie folgt und ohne darauf beschränkt zu sein, hergestellt werden:

- Herstellen einer Fasermischung aus

  ○ thermoplastischen Stapelfasern
  ○ bikomponenten Stapelfasern
  ○ thermoplastischen Klebefasern

- Herstellen eines Faserflors aus der Fasermischung mittels eines Vliesbildners, bspw Kardierung und Kreuzlegung bzw. aerodynamische Vliesbildung.
- Einstellen des gewünschten Flächengewichts
- Verfestigen des Faserflors zu einem Basismaterial mittels mechanischer Verfestigungseinheit, bspw mittels Nadelung und Einstellung der Dicke des Basismaterials
- Aufwickeln des Basismaterials mittels eines Wicklers
- Auslegen eines Presswerkzeugs für hohe Temperaturen (200°C - 220°C) (Matrize und Patrize)
- Vorbereiten und Vorheizen des Presswerkzeugs (Oberflächenvergütung / Entformung)
- Einlegen von einer oder mehreren Lagen des Basismaterials in das heiße Werkzeug, sodass sich ein Formling ergibt.
- Pressen und Erhitzen der Lagen des Formlings in einem Arbeitsschritt
- Entformen des heißen Formteils aus dem heißen Werkzeug.
- Kühlen des Formteils.
- Fertigstellung des Formteils (Beschneidung von Kanten, Überständen, ...)

Die vorliegende Erfindung beruht auf dem Zusammenhang der Dicke des Basismaterials mit dem Verpress-Grad im Presswerkzeug und der Benutzung von Klebefasern.

Bei Druck- und Hitzebehandlung des Basismaterials oberhalb der Glaspunkt-Temperatur der Klebefaser werden die Klebefasern weich, plastisch verformbar und klebrig. Durch den Druck werden die Matrixfasern in die weiche Klebefasermasse eingedrückt und bleiben zunächst kleben. Nach Erkalten sind die Matrixfasern in die Klebefasermasse an- oder eingebunden. Dem Stand der Technik ist des Weiteren zu entnehmen, dass bei Hitze- und Druckbehandlung ein Phasenübergang der amorphen Bereiche der Klebefasermasse in kristalline Bereiche stattfindet. Dies hat zur Folge, dass die Klebefasern Druck und Hitze-Behandlung keine Klebeeigenschaften mehr aufweisen, nun aber als Matrixfaser-versteifende Komponente im Formteil vorliegen.

Bei gegebener Dicke und Dichte des Formlings kann das resultierende Formteil nach Heizen / Verpressen / Abkühlen aufgrund der Abstände der Oberflächen von Matrize zu Patrize des Presswerkzeugs folgende Eigenschaften aufweisen:

- Der Abstand von Matrize zu Patrize entspricht der Dicke des Formlings oder ist maximal 10% geringer:

    Das Formteil hat eine unzureichende Biegesteifigkeit, der spezifische Strömungswiderstand liegt so gering, dass Schall nicht gedämpft wird.
    Der Pressgrad liegt zwischen 0-10%

- Der Abstand von Matrize zu Patrize entspricht zwischen 90-60% der Dicke des Formlings

    Das Formteil hat im Vergleich zum ungepressten Zustand eine höhere Formstabilität, ausgedrückt über die Beigesteifigkeit. Durch den erhöhten Anteil an oberflächlichen Abplattungen (1) liegt der spezifische Strömungswiderstand im Bereich von 1000-1500 Pa s/m.

    Der Abplattungsgrad liegt im Bereich von 25-50%.

    Der Pressgrad liegt zwischen 10-40%

- Der Abstand von Matrize zu Patrize entspricht zwischen 60-25% der Dicke des Formlings.

    Dieser Pressgrad wird im Sinne der Erfindung bevorzugt. Ein so hergestelltes Formteil hat im Vergleich zum ungepressten Zustand eine deutlich höhere Formstabilität, ausgedrückt über die Beigesteifigkeit. Durch die stärkere Pressung wird der Anteil an oberflächlichen Abplattungen (1) erhöht.

    Der spezifische Strömungswiderstand liegt im Bereich von 1500-3000Pa s/m.

    Der Abplattungsgrad liegt im Bereich von 50-75%.

    Der Pressgrad liegt zwischen 40-75%

- Der Abstand von Matrize zu Patrize beträgt kleiner 25% der Dicke des Formlings.

    Das Formteil hat im Vergleich zum ungepressten Formling eine sehr hohe Biegesteifigkeit.

    Die Klebefaseranteile werden flächig in der Mittelschicht zusammen der Fasermatrix flachgepresst, an der Oberfläche kommt es zu einer fast vollständigen Verhautung und Verdichtung. Der Strömungswiderstand steigt durch die hohe Verdichtung der porösen Struktur rapide an. Die auf das Formteil auftreffende Schallwelle kann nicht mehr eindringen und wird reflektiert. Das Formteil wirkt nicht mehr schalldämpfend.

    Durch die Verhautung ist das Formteil allerdings dicht gegenüber Flüssigkeitsbeaufschlagung und auch schlagzäh.

    Der Pressgrad liegt größer 75%

    Der Abplattungsgrad liegt >75%

Innerhalb des Presswerkzeugs können zonal unterschiedliche Abstände von Matrize zu Patrize gewählt werden. Dies bedeutet, dass innerhalb einer Pressform der Formling unterschiedlich verdichtet wird. An den Außenseiten des Formlings mit den Oberflächen der Matrize und/oder Patrize des geheizten Presswerkzeugs ergeben sich Kontaktflächen, an denen sich erfindungsgemäß durch Klebefasern Abplattungen (1) bilden.

Die erfindungsgemäßen Abplattungen (1) wirken begünstigend für die Schalldämpfung, da sie einen oberflächenvergrößernden Effekt bei auftreffenden Schallwellen über das aus dem Stand der Technik bekannte Maß der viskosen Reibung hinaus und damit zur Abschwächung der Intensität der Schallwellen beitragen.

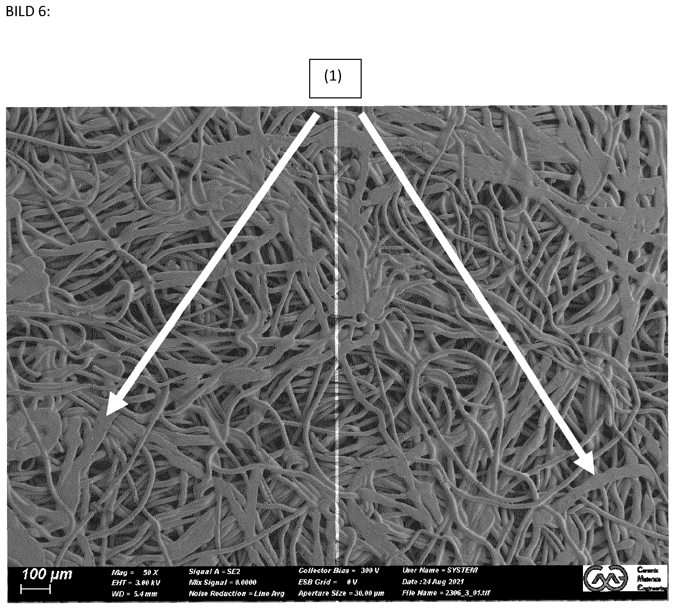

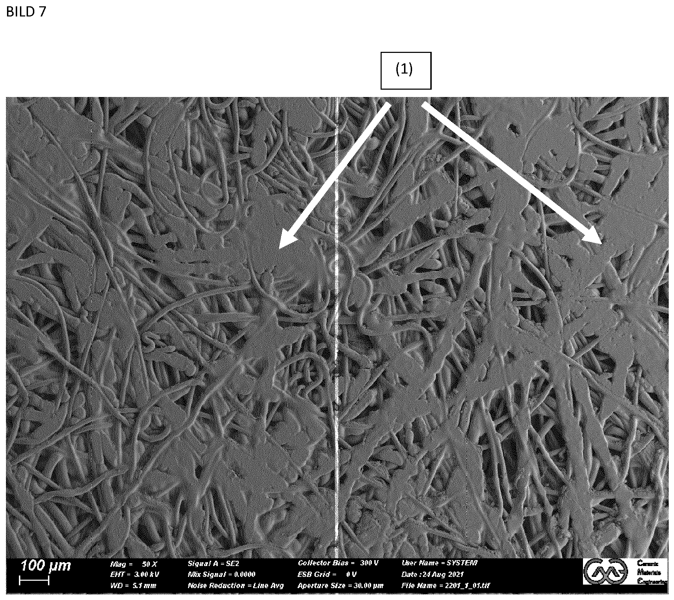

Ein erfindungsgemäß ausgeführtes Formteil weist an der Außenseite Abplattungen (1) auf. Die Dicke der Außenseite mit Abplattungen (1), ergibt sich aus dem Faserdurchmesser der eingesetzten Klebefasern und liegt

zwischen 15μm bis 40μm. Die Bilder 6 und 7 zeigen erfindungsgemäße Abplattungen (1). Die Bilder wurden mittels eines Rasterelektronenmikroskops aufgenommen.

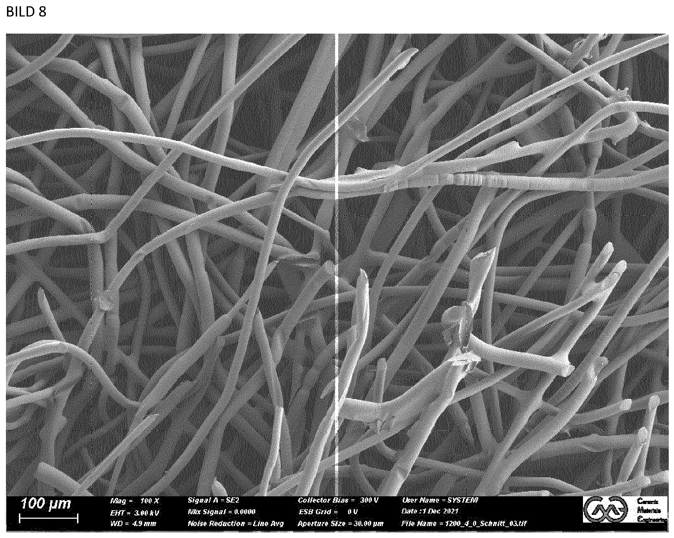

In der Mittelschicht des Formteils sind erfindungsgemäß keine Abplattungen (1) oder von Klebefaser gebildeten Faserklumpen enthalten. Klebefasern sind im Inneren des Formteils nur soweit verformt, als dass diese als Klebestelle mit sich selbst, mit Matrixfasern oder Schmelzfasern fungieren. Das Bild 8 zeigt eine REM-Aufnahme eines Längsschnitts des Inneren eines erfindungsgemäß ausgeführten Formteils.

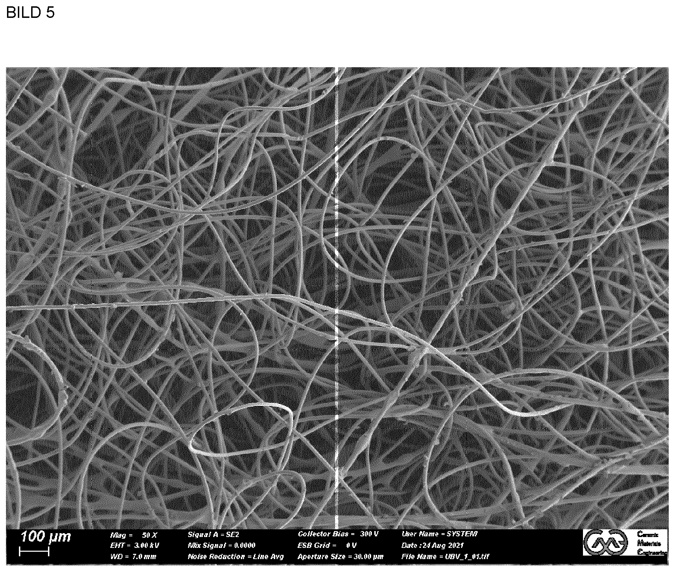

Die Abplattungen (1) in den Bilder 6 und 7 sind zur Verdeutlichung teilweise markiert Im Gegensatz dazu fehlen im Bild 5, dass das nach dem Stand der Technik hergestellte Produkt 32FT090104 zeigt, auf der Oberfläche der Außenschicht Abplattungen. Die Bilder 5 bis 8 wurden mittels eines Rasterelektronenmikroskops aufgenommen.

Überraschend zeigte sich, dass sich bei der Verwendung von Klebefasern mit Fasertitern größer 4dtex zur Erzielung der vorgenannten Abplattungen (1) eine verbesserte Schalldämpfung ergibt, die einher geht mit einer dem Stand der Technik überlegenen Biegesteifigkeit. Dies obwohl die Porosität dem Stand der Technik ähnlich ist, siehe dazu auch die Tabelle 1. Die Kombination der Abplattungen (1) an den Außenseiten eines erfindungsgemäß ausgeführten Formteils mit dem Fehlen von Verklumpungen im Inneren wirkt sich begünstigend für den Strömungswiderstand aus.

Bild 5 zeigt das Produkt 32FT090104, dessen Zusammensetzung der Tabelle 1 entnommen werden kann. Bei einer Hitze- und Druckbehandlung wie zuvor beschrieben werden die eingesetzten Faserstoffe in ihrer Form nicht verändert.

Die Bilder 6 und 7 zeigen das Produkt 88FT220111 bei verschiedenen Pressgraden. Zur Herstellung des Produkts auf Bild 6 lag der Pressgrad bei 39%, bei der Herstellung für das Produkt von Bild 7 lag der Pressgrad bei 63%.

Bei Anwendung der Methode zur Ermittlung des Abplattungsgrads ergeben sich für das Formteil aus Bild 6 Abplattungsgrad von 28%, das Bild 7 weist einen Abplattungsgrad von 66% auf.

Der Anteil der von Abplattungen auf der Oberfläche ist abhängig vom Verdichtungsgrad des Basismaterials.

Ein besonders vorteilhaft ausgeführtes schall-dämpfendes Formteil muss so ausgeführt werden, dass dessen schalldämpfende Bereiche einen Abplattungsgrad von mindestens 30% und maximal 75% aufweisen.

Die Schalldämpfung kann dabei direkt mittels Messung der Schallabsorption gemäß der DIN EN ISO 10534 ermittelt werden, indirekt kann dies auch mittels Ermittlung des spezifischen Strömungswiderstand geschehen.

Ein erfindungsgemäßes Formteil darf nur so weit verpresst sein, dass, zur Gewährleistung der Schalldämpfung, der spezifische Strömungswiderstand im Bereich von 1000 - 3000Pa s/m liegt

Ist der spezifische Strömungswiderstand größer 3000Pa s/m, kann der auftreffende Schall nicht genügend in das Material eindringen, d.h. er wird weitgehend reflektiert.

Ist der spezifische Strömungswiderstand kleiner 1000 Pa s/m, durchdringt der Schall die Struktur ohne das viskose Reibungsverluste (Dissipation) entstehen. Eine SchallDämpfung ist nicht gegeben.

In einer besonders vorteilhaften Ausführung ist im Inneren eines erfindungsgemäß ausgebildeten Formteils eine Vielzahl von Verbindungsstellen der Klebefaser vorhanden. Die ursprünglich Faserform der Klebefasern ist dabei weitestgehend erhalten, die Klebefaser dient als Versteifungskomponente, verklebt sich aber auch mit in der Matrix vorliegenden Fasern. Die amorphen Polymer-Anteile der Klebefasern kristallisieren nach Druck- und Hitzebehandlung unkontrolliert aus und verbessern dadurch die Steifigkeit eines erfinderisch ausgeführten Formteils.

Betrachtet man die Tabelle 1, so kann man erkennen, dass in einer bevorzugten Ausführung das erfindungsgemäß hergestellte Formteil 1 deutliche Unterschiede der Fasermischung in Bezug auf mittlere Faserfeinheit und Fasertypen im Vergleich zum Stand der Technik aufweist.

In einer besonders bevorzugten Ausführung liegt die mittlere Faserfeinheit des Basismaterials zur Herstellung des erfindungsgemäßen hergestellten Formteils fast um den Faktor 2 höher im Vergleich zum Stand der Technik.

Der spezifische Strömungswiderstand liegt bei dem erfindungsgemäß hergestellten Produkt 88FT220111, Pressgrad 62% bei 2200Pa s/m, ein gemäß des Stands der Technik hergestellten Materials liegt dieser bei 1736Pa s/m.

Die Bauteilsteifigkeit, ausgedrückt als Biegesteifigkeit bei 5mm Verformungsweg liegt bei dem erfindungsgemäß hergestellten Produkt 88FT220111 in MD (Längs-) - Richtung bei 8,50N und in CD (Quer-) -Richtung bei 10,14N, das gemäß Stand der Technik hergestellten Materials liegt in MD-Richtung bei 5,71 N und in CD-Richtung bei 5,97N.

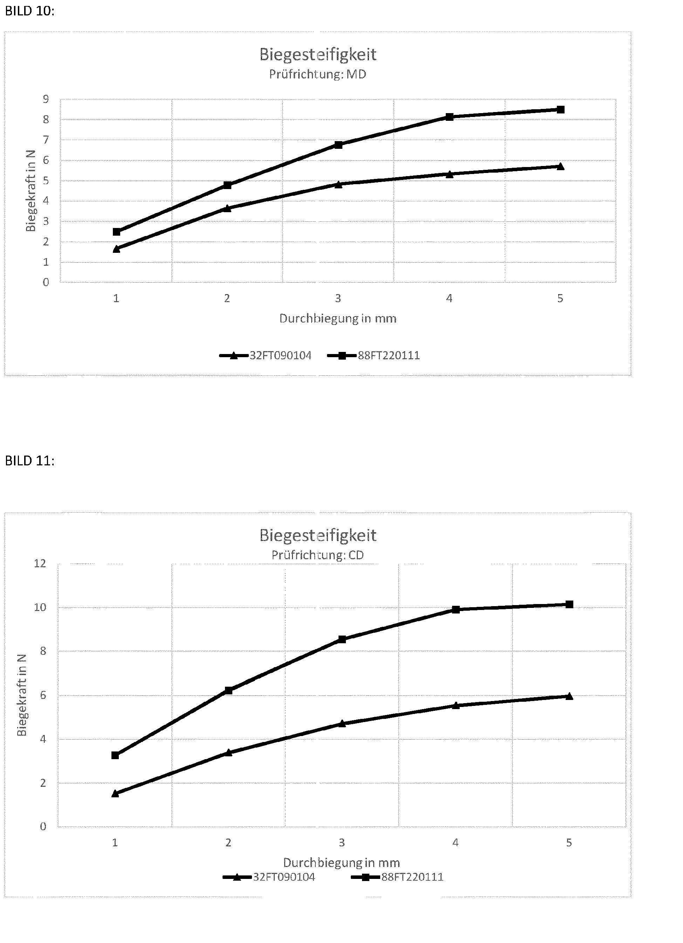

Die Bilder 10 und 11 verdeutlichen dies nochmals.

Betrachtet man die Tabelle 2, so zeigt sich, dass die Schallabsorption des erfindungsgemäß hergestellten Produkts 88FT220111 bei allen geprüften Frequenzen über dem des nach dem Stand der Technik hergestellten Materials liegt.

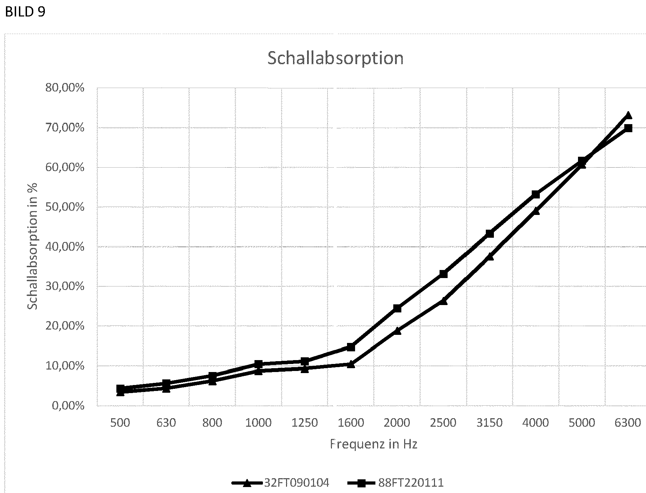

Die in Bild 9 gezeigte Schalldämpfungskurve verdeutlicht dies nochmals.

Darüber hinaus gewährleisten die Abplattungen (1) auch eine höhere Schlagfestigkeit und bei hohem Pressgrad auch eine Flüssigkeits-Dichtheit.

Ein daraus resultierendes Formteil kann je nach Formgebung des Presswerkzeuges und zonaler Verdichtung Bereiche aufweisen, die schalldämpfend und formstabilisierend oder flüssigkeitsdicht / schlagzäh sind.

Ein erfindungsgemäß hergestelltes Formteil kann daher, je nach Grad der Verpressung in der Pressform für verschiedenste Endanwendungen verwendet werden.

Bei hohem Pressgrad größer 65% kann bspw ein erfindungsgemäß ausgeführtes Formteil flüssigkeitsdicht und schlagzäh sein und als Radlaufschale verwendet werden.

Bei mittlerem Pressgrads von 40-65% kann ein erfindungsgemäß ausgeführtes Formteil bspw als Unterbodenverkleidung oder aber auch als selbstragender Dachhimmel oder für Verkleidung von A, B oder C-Säulen in einem KFZ benützt werden.

Bei Verwendung von einheitlicher Wahl der eingesetzten Polymere, bspw auf Polyethylenterephthalat-Basis, ist eine Recycling-Möglichkeit gewährleistet.

Tabelle 1:

| Bezeichnung | Einheit | erfindungsgemäß ausgeführtes Formteil 1 | | Formteil gemäß dem Stand der Technik | |
|---|---|---|---|---|---|
| Basismaterial | Einheit | 88 FT 22 01 11 | | 32 FT 09 01 04 | |
| Fasermischung: | | 20% Schmelz-Klebefasern CoPET/-PET4,4dtex 60% Klebefasern PET-amorph, 7,0dtex 20% Matrixfaser PET 3,3dtex | | 50% Schmelz-Klebefasern CoPET/PET4,4dtex 50% Matrixfasern PET 1,7dtex | |
| Mittlere Faserfeinheit des Basismaterials | g/10000m | 5,21 | | 2,45 | |
| Mittlerer Faserdurchmesser | m | 0,000022 | | 0,000015 | |
| Mittlere Dichte des Fa-sermaterials | $kg/m^3$ | 1380 | | 1380 | |
| Dicke des Basismaterials vor Verpressung | mm | 10,8 | | 10,6 | |
| Spezifische Faserober-fläche des Basismate-rials: | $m^2/g$ | 0,13 | | 0,19 | |
| FG | $kg/m^2$ | 1.348 | | 1,328 | |
| Dicke des Formteils | mm | 4,0 | | 4,1 | |
| Pressgrad | % | 63,0 | | 61,3 | |
| RG des Formteils: | $kg/m^3$ | 337 | | 324 | |
| Porosität des Formteils: | % | 76 | | 77 | |
| Spezifischer Strömungswiderstand des Formteils: | Pa s/m | 2200 | | 1736 | |
| Biegesteifigkeit ( 3-Punkt - Biegeversuch) des Formteils | N | MD | CD | MD | CD |
| Verfomungsweg 1mm | | 2,50 | 3,26 | 1,67 | 1,52 |
| Verfomungsweg 2mm | | 4,79 | 6,22 | 3,65 | 3,38 |
| Verfomungsweg 3mm | | 6,77 | 8,54 | 4,83 | 4,71 |
| Verfomungsweg 4mm | | 8,14 | 9,90 | 5,33 | 5,54 |
| Verfomungsweg 5mm | | 8,50 | 10,14 | 5,71 | 5,97 |
| Abplattungsgrad | % | 66 | | 0 | |

Tabelle 2:

| Messung Impedanz - Rohr DIN EN ISO 10534 - 2 | | |
|---|---|---|
| Rundes Rohr, Ø | | |
| 29mm | | |
| Direkt auf schallhartem Abschluss | | |
| Prüffrequenz (Hz) | 32FT090104 | 88FT220111 |
| 500 | 3,50% | 4,40% |
| 630 | 4,40% | 5,70% |
| 800 | 6,30% | 7,60% |
| 1000 | 8,80% | 10,50% |
| 1250 | 9,40% | 11,20% |
| 1600 | 10,50% | 14,80% |
| 2000 | 18,80% | 24,50% |
| 2500 | 26,40% | 33,20% |
| 3150 | 37,60% | 43,30% |
| 4000 | 49,00% | 53,20% |
| 5000 | 60,70% | 61,70% |
| 6300 | 73,10% | 69,90% |

**Patentansprüche**

1. Nach Druck- und Hitzebehandlung dimensionsstabiles, akustisch wirksames und schalldämpfendes Formteil, bestehend aus einem mechanisch verfestigtem Stapelfaser-Vliesstoff, gebildet Fasern, nämlich aus

   - Matrixfasern, wobei die Matrixfasern Stapelfasern aus synthetischen, thermoplastischen Polymeren sind, deren Filamente verstreckt wurden und einen hohen Anteil kristalliner Bereiche aufweisen,
   - bikomponenten Schmelzklebefasern, wobei die Schmelzklebefasern synthetische Fasern sind, deren Polymere schmelzbare Anteile aufweisen, die in einem Temperaturbereich zwischen dem Glasumwandlungspunkt und dem Schmelzpunkt weich, aber nicht klebrig sind, und
   - thermoplastischen Klebefasern, wobei die Klebefasern synthetische homopolymere Stapelfasern sind, die überwiegend amorphe, noch nicht kristallisierte Anteile aufweisen, sowie
   - eine Außenschicht und eine Mittelschicht aufweisend

   **dadurch gekennzeichnet, dass**

   - an der Außenschicht des Formteils Abplattungen (1), die durch Klebefasern gebildet werden, liegen,
   - in der Mittelschicht des Formteils keine Abplattungen (1) vorhanden sind,
   - die Außenschicht einen Abplattungsgrad von 25% bis 75% aufweist, wobei der Abplattungsgrad ermittelt wird, indem zunächst bestimmt wird, wie viele abgeplattete Fasern in der Außenschicht eines Formteils liegen und dann die dabei erkennbaren Abplattungen flächenmäßig ins Verhältnis zur Fläche der Oberfläche gesetzt werden,
   - die Außenschicht eine Dicke von 15$\mu$m bis 40 $\mu$m aufweist und
   - das Formteil einen spezifischen Strömungswiderstand im Bereich von 1000 bis 3000Pa s/m aufweist.

2. Formteil gemäß Anspruch 1, **dadurch gekennzeichnet, dass**

   - das Formteil bildende Fasermaterial aus

      60-10 Gew% thermoplastischen Stapelfasern maximal 60 Gew% Schmelzklebefasern
      80-40 Gew% Klebefasern

besteht.

3. Formteil gemäß Anspruch 1, **dadurch gekennzeichnet, dass**

- die Stapelfasern einen Titer von 1,7 - 3,3 dtex,
- die Schmelzklebefasern einen Titer von 4,4 - 7,7 dtex und
- die Klebefasern einen Titer von 4,4 -17 dtex

aufweisen

4. Formteil gemäß Anspruch 1, **dadurch gekennzeichnet, dass**
der mittlere Faserdurchmesser der das Formteil bildende Fasermischung zwischen 3,5 bis 11,1 dtex liegt.

**Claims**

1. Acoustically effective molded part which is dimensionally stable after pressure and heat treatment, wherein the effective molded part consists of a mechanically solidified staple fiber nonwoven fabric formed from fibers that comprise

- matrix fibers, wherein matrix fibers refer to normal staple fibers made of synthetic, thermoplastic polymers the filaments of which have been stretched and have a high proportion of crystalline regions,
- bicomponent hotmelt adhesive fibers, wherein the hotmelt adhesive fibers refer to synthetic fibers the polymers of which become soft but not sticky in the temperature range starting when the glass transition point (Tg) is reached up to the melting point, and
- thermoplastic adhesive fibers, wherein adhesive fibers refer to synthetic homopolymeric staple fibers which have predominantly amorphous, not yet crystallized components, and
- comprising an outer layer and a middle layer

**characterized in that**

- flattenings formed by the adhesive fibers are located on the outer layer of the effective molded part,
- there are no flattenings in the middle layer of the effective molded part,
- the outer layer has a flattening degree of 25 % to 75 %, wherein the flattening degree is determined by first determining how many flattened fibers are located in the outer layer of the molded part and then the flattened fibers are measured in relation to the area of the surface,
- the outer layer has a thickness of 15 $\mu$m to 40 $\mu$m and
- the effective molded part has a specific flow resistance in the range from 1000 to 3000 Pa s/m.

2. Molded part according to claim 1, **characterized in that** the effective molded part is formed by fiber material consisting of

∘ 60-10 wt% thermoplastic staple fibers,
o up to 60-0 wt% hotmelt adhesive fibers and
∘ 80-40 wt% adhesive fibers.

3. Molded part according to claim 1, **characterized in that**

∘ the staple fibers have a titer of 1,7 - 3,3 dtex,
∘ the hotmelt adhesive fibers have a titer of 4,4 - 7,7 dtex, and
∘ the adhesive fibers have a titer of 4,4 - 17 dtex.

4. Molded part according to claim 1, **characterized in that** the average fiber diameter of the fiber blend forming the effective molded part is between 3,5 and 11,1 dtex.

**Revendications**

1.  Pièce moulée dimensionnellement stable, acoustiquement efficace et insonorisante après traitement par pression et chaleur, constituée d'un tissu non tissé à base de fibres discontinues mécaniquement solidifié, formé de fibres, à savoir :

    - des fibres matricielles, dans laquelle les fibres matricielles sont des fibres discontinues issues de polymères synthétiques thermoplastiques dont les filaments ont été étirés et présentent une forte proportion de régions cristallines,
    - des fibres adhésives thermofusibles à deux composants, dans laquelle les fibres adhésives thermofusibles sont des fibres synthétiques dont les polymères présentent des parties fusibles qui sont molles, mais non collantes, dans une plage de température comprise entre le point de transition vitreuse et le point de fusion, et
    - des fibres adhésives thermoplastiques, dans laquelle les fibres adhésives sont des fibres discontinues homopolymères synthétiques présentant des parties majoritairement amorphes non encore cristallisées, et
    - présentant une couche extérieure et une couche médiane

    **caractérisée en ce que**

    - sur la couche extérieure de la pièce moulée se trouvent des aplatissements (1) formés par des fibres adhésives,
    - aucun aplatissement (1) n'est présent dans la couche médiane de la pièce moulée,
    - la couche extérieure présente un degré d'aplatissement compris entre 25 % et 75 %, dans laquelle le degré d'aplatissement est déterminé en déterminant d'abord le nombre de fibres aplaties dans la couche extérieure d'une pièce moulée, puis en mettant en relation la surface des aplatissements ainsi détectables avec la superficie de la surface,
    - la couche extérieure présente une épaisseur comprise entre 15 $\mu$m et 40 $\mu$m et
    - la pièce moulée présente une résistance spécifique à l'écoulement située dans la plage comprise entre 1000 et 3000Pa s/m.

2.  Pièce moulée selon la revendication 1, **caractérisée en ce que**

    - le matériau fibreux formant la pièce moulée est constitué de

        60 à 10 % en poids de fibres discontinues thermoplastiques
        au plus 60 % en poids de fibres thermofusibles
        80 à 40 % en poids de fibres adhésives.

3.  Pièce moulée selon la revendication 1, **caractérisée en ce que**

    - les fibres discontinues présentent un titre compris entre 1,7 et 3,3 dtex,
    - les fibres adhésives thermofusibles présentent un titre compris entre 4,4 et 7,7 dtex et
    - les fibres adhésives présentent un titre compris entre 4,4 et 17 dtex.

4.  Pièce moulée selon la revendication 1, **caractérisée en ce que** le diamètre moyen de fibre du mélange de fibres formant la pièce moulée se situe entre 3,5 et 11,1 dtex.

BILD 1

BILD 2

BILD 3

BILD 4

(1)

BILD 5

BILD 6:

BILD 7

(1)

100 μm | Mag = 50 X | Signal A = SE2 | Collector Bias = 300 V | User Name = SYSTEM
EHT = 3.00 kV | Mix Signal = 0.0000 | ESB Grid = 0 V | Date : 24 Aug 2021
WD = 5.1 mm | Noise Reduction = Line Avg | Aperture Size = 30.00 μm | File Name = 2201_1_01.tif

BILD 8

BILD 9

**Schallabsorption**

BILD 10:

Biegesteifigkeit
Prüfrichtung: MD

BILD 11:

Biegesteifigkeit
Prüfrichtung: CD

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 484778 A
- EP 476538 A
- DE 102005035014
- US 2016222561 A1
- AU 2010233029 C1